# EUROPEAN PATENT SPECIFICATION

(11) **EP 4 419 868 B1**
(45) Date of publication and mention of the grant of the patent: **24.06.2026**
(21) Application number: 22803066.4
(22) Date of filing: 20.10.2022
(51) Int. Cl.: G01B 17/02, G01N 29/07, C21B 7/10, C21B 7/24, F27B 1/28, F27D 21/02, F27D 19/00

(54) **A DEVICE AND SYSTEM FOR MEASURING THICKNESS OF A CONDUIT**
VORRICHTUNG UND SYSTEM ZUR MESSUNG DER DICKE EINER LEITUNG
DISPOSITIF ET SYSTÈME DE MESURE D'ÉPAISSEUR D'UN CONDUIT

(30) Priority: 21.10.2021 IN 202131047839
(43) Date of publication of application: 28.08.2024
(73) Proprietor: Tata Steel Limited, Jamshedpur, Jharkhand 831001 (IN)
(72) Inventor: AGRAWAL, Rohit Kumar, Jamshedpur Jharkhand 831001 (IN); SUNDARAM, R. Shunmuga, Jamshedpur Jharkhand 831001 (IN); BALAMURUGAN, Srinivasagan, Jamshedpur Jharkhand 831001 (IN); REDDY, Bonikila Pradeep, Jamshedpur Jharkhand 831001 (IN); PRATAP, Vikrant, Jamshedpur Jharkhand 831001 (IN)
(74) Representative: Taylor, Gail
(86) International application number: PCT/IB2022/060078
(87) International publication number: WO 2023/067533

(56) References cited:
- EP-A1- 3 693 690
- KR-B1- 101 594 719
- US-A1- 2003 188 589

## Description

### TECHNICAL FIELD

Present disclosure, in general, relates to a field of measurement. Particularly, but not exclusively, the present disclosure relates to cooling stave used in a blast furnace. Further, embodiments of the present disclosure discloses a device and a system for measuring thickness along a length of the cooling stave.

### BACKGROUND OF THE DISCLOSURE

Blast furnace is a structure employed for smelting of iron from iron ore. The blast furnace is typically lined with refractory firebricks to withstand higher temperatures approx1900°C or higher during smelting process. To cool the blast furnace, cooling staves have been employed. Such cooling staves circulates coolant and are installed between a shell of the blast furnace and the refractory firebricks. The cooling staves are defined with internal channels for circulating the coolant. The cooling staves employ a ribbed profile, that provide slots for mounting refractory bricks which form the innermost lining of the furnace, and also serving as fins which enhance heat transfer. The cooling staves in conjunction with the refractory firebricks are configured to extract heat and thereby protect the shell of the blast furnace from elevated temperatures.

Due to factors such as burden speed, hardness of burden material, high temperature, material pressure and the like, external surfaces of the cooling staves are subjected to wear, especially the ribs. This wear of the ribs (i.e., the cooling staves) leads to leakage of a coolant which reduces the cooling effect and results in damage of the shell of the blast furnace. Further, the leaked coolant enters the blast furnace resulting in catastrophic failure of the blast furnace and cause industrial hazardous, which is undesired. Hence, it is desirable to inspect the cooling staves for leakage periodically. However, as the cooling staves are located inside the shell and forms the innermost layer, they are not accessible from outside and is difficult to monitor condition of the cooling staves.

Considering the above, with advancements in technology, various techniques or device have been developed for monitoring the thickness of the cooling staves. Conventional measuring techniques include positioning a thickness measuring device at an accessible location (i.e., inlet or outlet) of the cooling stave, thereby measuring thickness of the cooling stave at a specific location. However, as the wear pattern of the cooling staves may not be uniform, the wear along the length of the cooling staves cannot be measured by the conventional measuring techniques, which is undesired since, measuring thickness at a specific location may not be reliable.

Furthermore, in the conventional measuring techniques, demand for draining of coolant from the cooling staves for testing. Draining of the coolant abrupts operation of the blast furnace, thereby affecting the production. In addition, conventional measuring techniques require minimum or no air gap between the measuring device and the cooling stave for effective thickness measurement. For achieving zero air gap, the conventional measuring devices are configured to apply a thin layer of couplant i.e., oil, grease, water between the measuring device and the cooling stave. This configuration renders the measuring device complex and cumbersome to use.

EP 3 693 690 A1 discloses a device for measuring thickness of a cooling conduit of a cooling stave in a blast furnace, said device comprising a sensing arrangement coupled to a chain, wherein the sensing arrangement comprises an ultrasound transducer disposed in a probe holder including an expandable structure configured to abut the ultrasound transducer against the inner wall of the conduit.

Present disclosure is directed to overcome one or more limitations stated above or any other limitations associated with the known arts.

### SUMMARY OF THE DISCLOSURE

One or more shortcomings of the prior art are overcome by a device and system as claimed and additional advantages are provided through the device and system as claimed in the present disclosure. Additional features and advantages are realized through the techniques of the present disclosure. Other embodiments and aspects of the disclosure are described in detail herein and are considered a part of the claimed disclosure.

According to the invention as defined in claim 1, a device for measuring thickness of a conduit is disclosed. The device includes a plurality of links pivotally connected to each other and includes at least one carrier link which is positioned between at least a pair of the plurality of links. The at least one carrier link in the device is configured to accommodate at least one sensor. Further, the device includes at least one protrusion which extends from the at least one carrier link. The at least one protrusion is configured to support a portion of the at least one sensor, to contact the portion of the at least one sensor with the conduit for measuring thickness of the conduit.

In an embodiment, at least one link of the plurality of links is defined with a provision to accommodate an image capturing unit configured to capture images inside the conduit.

In an embodiment, the at least one carrier link is disposed offset to a longitudinal axis of the plurality of links.

According to the invention, the device includes at least a pair of guide projections extending from the at least one pair of the plurality of links. At least the pair of guide projections are configured to interact with the conduit for measuring thickness of the conduit. The at least one pair of guide projections extend in a direction opposite to the at least one protrusion.

In an embodiment, the device includes a resilient member disposed across the at least one carrier link and is configured to provide biasing force on to the at least one carrier link to offset the at least one carrier link from the longitudinal axis of the plurality of links.

In an embodiment, the at least one sensor is an ultrasonic sensor.

According to the invention as defined in claim 6, a system for measuring thickness of a conduit is disclosed. The system includes a guide tube and a device according to claim 1 positioned in the guide tube. The device is configured to displace along the guide tube into the conduit.

In an embodiment, the system includes a control unit communicatively coupled to the device and configured to measure the thickness along the length of the conduit.

In an embodiment, the guide tube includes a pivot pin in an inner surface of the guide tube. The pivot pin is structured to facilitate pivotal movement of the plurality of links into the conduit.

In an embodiment, the system includes an image capturing unit coupled to the control unit and positioned on at least one of the plurality of links. The image capturing unit is configured to capture images inside the conduit.

In an embodiment, the system includes a display unit communicatively coupled to the control unit. The control unit is configured to display thickness along the length of the conduit through the display unit.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiments when read in conjunction with the accompanying figures. One or more embodiments are now described, by way of example only, with reference to the accompanying figures wherein like reference numerals represent like elements and in which:
Fig. 1 illustrates a schematic view of a blast furnace, in accordance with an embodiment of the present disclosure.
Fig. 1a is a magnified view of portion A of Fig. 1, which illustrates a sectional view of a cooling conduit, in accordance with an embodiment of the present disclosure.
Fig. 2 illustrates a schematic view of a system for measuring thickness along a length of the conduit, in accordance with an embodiment of the present disclosure.
Fig. 3 illustrates a schematic view of a device for measuring thickness of the conduit, in accordance with an embodiment of the present disclosure.
Figs. 4a and 4b illustrates operating conditions of the system for measuring thickness along a length of the conduit, in accordance with an embodiment of the present disclosure.

The figures depict embodiments of the disclosure for purposes of illustration only. One skilled in the art will readily recognize from the following description that alternative embodiments of the system and method illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. Additional features and advantages of the disclosure will be described hereinafter which forms the subject of the claims of the disclosure. It should be appreciated by those skilled in the art that, the conception and specific embodiments disclosed may be readily utilized as a basis for modifying other devices, systems, assemblies, and mechanisms for carrying out the same purposes of the present disclosure. It should also be realized by those skilled in the art that, such equivalent constructions do not depart from the scope of the disclosure as set forth in the appended claims. The novel features which are believed to be characteristics of the disclosure, to its system, together with further objects and advantages will be better understood from the following description when considered in connection with the accompanying figures. It is to be expressly understood, however, that each of the figures is provided for the purpose of illustration and description only and is not intended as a definition of the limits of the present disclosure.

The terms "comprises", "comprising", or any other variations thereof, are intended to cover a non-exclusive inclusions, such that a system or a device that comprises a list of components or steps does not include only those components or steps but may include other components or steps not expressly listed or inherent to such setup or device. In other words, one or more elements in a system or apparatus proceeded by "comprises... a" does not, without more constraints, preclude the existence of other elements or additional elements in the system or apparatus.

In accordance with various embodiments of the present disclosure, a system for measuring thickness along a length of a conduit such as cooling stave in the blast furnace is disclosed. The system may include a guide tube adapted to be positioned or passed through an inlet port or an outlet port of the conduit. Further, the system may include a device that may be positioned in the guide tube and may be configured to displace along the guide tube and into the conduit, throughout a length of the conduit. The device may include a plurality of links that may be pivotally connected to each other and may include at least one carrier link that is positioned between at least a pair of the plurality of links. The at least one carrier link may be disposed offset to a longitudinal axis (A-A) of the plurality of links. The at least one carrier link may be configured to accommodate at least one sensor. Further, the device may include at least one protrusion that may extend from the at least one carrier link and may be configured to support a portion of the at least one sensor. Furthermore, the device may include a pair of guide projections that may extend from the at least one link of the plurality of links at a side opposite to a side at which the at least one protrusion extends from the carrier link. The pair of guide projections may be configured to interact with the conduit and rigidly abut the at least one protrusion against an inner surface of the conduit, such that, the at least one sensor may contacted the conduit for measuring thickness of the conduit. Additionally, the device may include an image capturing unit, which may be positioned in a provision defined in at least one link of the plurality of links. The image capturing unit may be configured to capture images inside the conduit Further, the system may include a control unit which may be communicatively coupled to the device, particularly the at least one sensor. The control unit may be configured to analyze and determine thickness of the conduit, based on signals sensed by the at least one sensor.

In an operational embodiment, the guide tube may be positioned in an inlet port or an outlet port of the conduit. The device may be then positioned within the guide tube. Further, the device may be displaced towards the conduit through the guide tube. The device upon displacement into the conduit may result in at least one link of the plurality of links to contact or abut the inner surface of the conduit. Upon contact of the at least one link with the inner surface of the conduit, each of the plurality of links may pivot about a pivotal point such that, the device (i.e., the plurality of links) may traverse into the conduit along a length of the conduit. During traversing of the plurality of links into the conduit, the pair of the protrusions may interact with the conduit and simultaneously the at least one projection may abut the inner surface of the conduit. The abutment of the at least one projection may abut the at least one sensor against the inner surface of the conduit for measuring thickness of the conduit. The at least sensor may continuously measure thickness of the conduit, during traversing of the device and thereby measuring thickness along a length of the conduit.

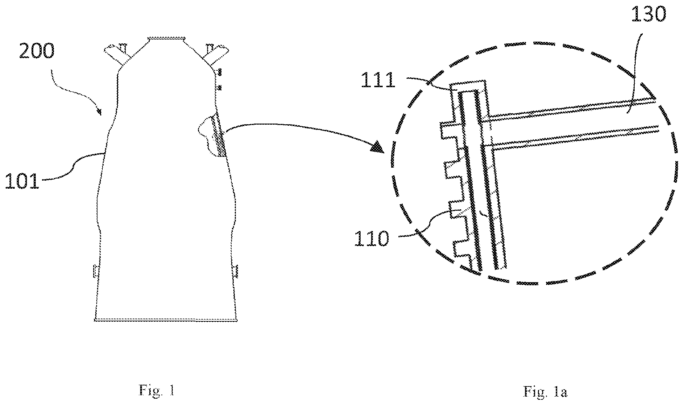

Reference will now be made to the exemplary embodiments of the disclosure, as illustrated in the accompanying drawings. Wherever possible, same numerals have been used to refer to the same or like parts. The following paragraphs describe the present disclosure with reference to Figs. 1-4b.

Fig. 1 illustrates a schematic view of a blast furnace (200). The blast furnace (200) may be provisioned with a plurality of cooling staves or conduits (111) [hereafter referred to as conduit (111)] between a shell (101) and a refractory lining [not shown in figs]. The conduit (111) may be configured to channelize coolant and extract heat from blast furnace (200) to protect the shell (101) from high temperatures. In an embodiment, the conduit (111) may be defined with any profile including but not limited to circular, capsule, square, rectangular, triangular, and any other geometrical shape. The conduit (111) may be made of steel, iron, copper and any other material suitable for channelizing the coolant, exchange heat and capable of withstanding high temperatures. As apparent from Fig. 1a, the conduit (111) may be defined with an inlet/outlet port (130) for introducing and extracting the coolant from the conduit (111). The conduit (111) may include a channel defined by an inner surface and a plurality of ribs (110) defined on the outer surface. The ribs (110) may be configured to facilitate effective heat transfer between the coolant and the blast furnace (200). In an embodiment, exposure of the conduit (111) to elevated temperatures may result in wear of the conduit (111). The wear may be caused by the descending burden material and the rising gas flow until the new slag layer formed over the hot face of the staves and may result in failure of the conduit (111), which leads to catastrophic failure of the blast furnace (200) due to ingress of coolant into the blast furnace (200).

It should be noted that, the blast furnace and the cooling staves referred are for illustration only and cannot be construed as limitation as the conduit (111) adapted in any systems.

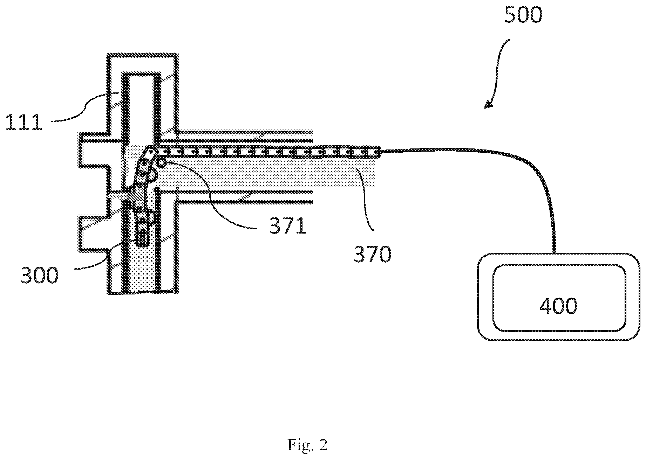

Fig. 2 is an exemplary embodiment of the present disclosure, which illustrates a schematic view of a system (500) for measuring thickness of the conduit (111). The system (500) of the present disclosure may be adapted to measure thickness of the conduit (111) along its entire length. As seen in Fig, 2, the system (500) may include a guide tube (370). The guide tube (370) may be configured to be received in the inlet/outlet port (130) of the conduit (111). In an embodiment, the guide tube (370) may be a hollow elongated structure, which may be positioned in the inlet/outlet port (130) of the conduit (111). Further, the system (500) may include a device (300) for measuring the thickness of the conduit (111). The device (300) may be received or positioned in the guide tube (370) and may be configured to displace along the guide tube (370) and transverse into the conduit (111) along its length.

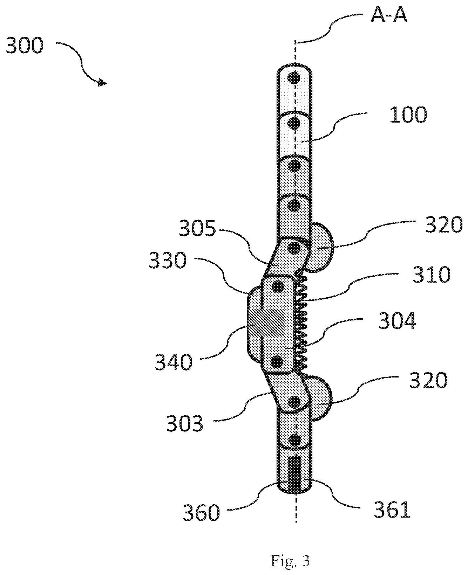

Turning now to **Fig. 3****,** which illustrates a schematic view of the device (300). The device (300) may include a plurality of links (100) each pivotally connected to adjacent link. In an embodiment, the plurality of links (100) may be connected to each other with a single degree of freedom or may have more than one degree of freedom. Further, the device (300) may include at least one carrier link (304) which may be positioned between at least a pair of the plurality of links (100). The at least one carrier link (304) may be configured to accommodate at least one sensor (340) which is configured to measure the thickness of the conduit (111). In an embodiment, the sensor (340) may be but not limiting to an ultrasonic sensor or an ultrasonic transducer. In an illustrated embodiment, the device (300) includes one carrier link (304) and the same cannot be construed as a limitation, since the device (300) may include more than one carrier link (304) based on the configuration of the device (300). In an embodiment, the at least one carrier link (304) may be disposed offset to a longitudinal axis (A-A) of the plurality of links (100). The offset position of the at least one carrier link (304) may facilitate in positioning the at least one sensor (340) proximal to the surface of the conduit (111). In an embodiment, the device (300) may include at least one connecting link (303, 305) positioned on either sides of the at least one carrier link (304) and between the plurality of links (100). The at least one connecting link (303, 305) may be configured to connect the at least one carrier link (304) with the plurality of links (100) and may be adapted to position the at least one carrier link (304) at an offset to the longitudinal axis (A-A) of the plurality of links (100). Furthermore, the device (300) may include a resilient member (310) disposed across the at least one carrier link (304) and coupled to the connecting links (303, 305). The resilient member (310) may angularly position the connecting links (303, 305) with respect to at least one link of the plurality of links (100) and may be configured to provide a biasing force on to the at least one carrier link (304) to offset the at least one carrier link (304) from the longitudinal axis (A-A) of the plurality of links (100). As an example, the resilient member (310) may be but not limiting to a tortional spring, a compression spring, a helical spring, polymeric material and the like capable of exerting an elastic biasing force.

Referring further to Fig. 3, the device (300) may include at least one protrusion (330) extending from the at least one carrier link (304). The at least one protrusion (330) may be removably fixed to the at least one carrier link (304) or may be an integral part of the at least one carrier link (304). The at least one protrusion (330) may be configured to support at least one sensor (340) positioned in the at least one carrier link (304). In an embodiment, the at least one protrusion (330) may be configured to support a portion of the at least one sensor (340) such that, the at least one sensor (340) may be contacted with the inner surface of the conduit (111). Further, the device (300) includes a pair of guide projections (320) which may extend from the at least one pair of the plurality of links (100). In the illustrated embodiment, the device (300) includes two guide projections (320) and the same cannot be construed as a limitation, since the device (300) may include more than two guide projections (320). According to the invention, the pair of guide projections (320) extend in a direction opposite to the at least one protrusion (330). The pair of guide projections (320) may be configured to interact with the conduit (111). That is, the pair of guide projections (320) may be configured to abut the conduit (111) and slide along the length of the conduit (111) abutting the surface of the conduit (111), during traversing of the device (300) within the conduit (111).

In an embodiment, the size of the pair of guide projections (320) may depend on size of the conduit (111), that is, the size of the pair of guide projections (320) may be increased or decreased based on size of the conduit (111) such that the pair of guide projections (320) interact with the inner surface of the conduit (111), thereby aiding in abutting of the at least one protrusion (330) [thus, the at least one sensor] with the surface of the conduit (111) to be measured.

In an embodiment, the device (300) may include an image capturing unit (360). The image capturing unit (360) may be accommodated within a provision defined in at least one link of the plurality of links (100). In an illustrated embodiment, as seen in Fig. 3 the provision (361) may be defined in a link at an end of the plurality of links (100). The image capturing unit (360) may be configured to capture images within the conduit (111) and provide visual of any blockages and profile within the conduit (111). In an embodiment, the image capturing unit (360) may be including but not limited to a camera, a proximity sensor, image sensor, light sensor, and the like.

Referring back to Fig. 2, the guide tube (370) comprises a pivot pin (371) in an inner surface. The pivot pin (371) may be configured to support the device (300) within the guide tube (370) and may be configured to pivot each of the plurality of links (100), to facilitate traversing of the device (i.e., the plurality of links) into the conduit (111). In an embodiment, the system (500) may include a control unit (400). The control unit (400) may be communicatively coupled to the device (300). In an embodiment, the control unit (400) may be communicatively coupled to the at least one sensor (340) and may be configured to analyze and determine thickness of the conduit, based on signals sensed by the at least one sensor (340). Further, in another embodiment, device (300) may include a display screen [not shown in Figs.], which may be communicatively coupled to the image capturing unit (360) and configured display images captured by the image capturing unit (360). Further, the display screen may be configured to display the measurement values and location of the measurement.

In an embodiment, the device (300) may have a three point contact with the inner surface of the conduit (111) that is, the pair of guide projections (320) may contact the inner surface of the conduit (111) thus facilitating abutting of the at least one protrusion (330) (thus, the at least one sensor) with the surface of the conduit (111) to be measured.

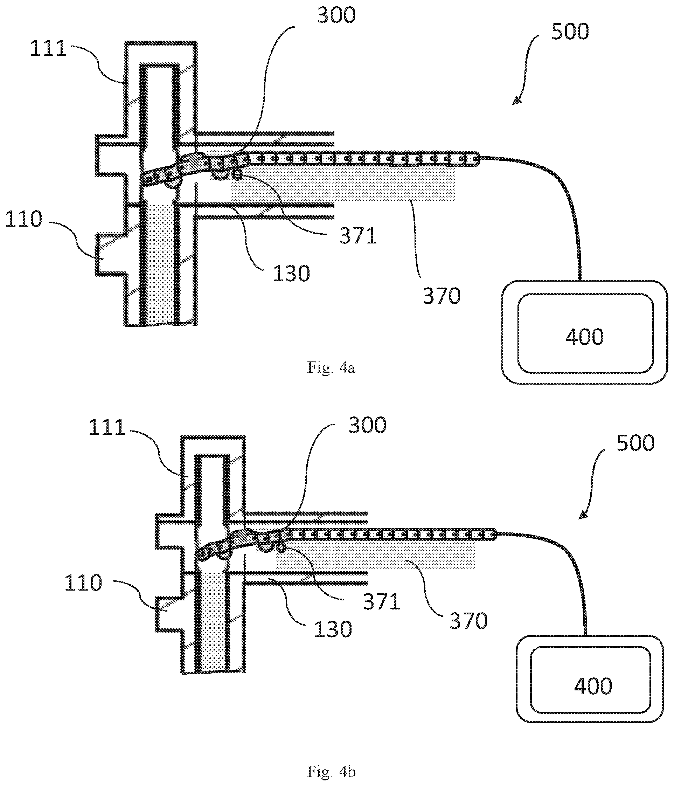

In an operational embodiment, as seen in **Figs 4a, 4b** **and** **2****,** the guide tube (370) may be positioned in an inlet/outlet port (130) of the conduit (111). In an illustrated embodiment, the conduit (111) includes the inlet port (130) and outlet port (130) perpendicular to the passageway of the conduit and the same cannot be construed as a limitation, since the conduit may include inlet and outlet port defined within the passageway of the conduit (111). Further, the device (300) may be positioned within the guide tube (370) and may be supported by the pivot pin (371). Upon positioning the device (300) within the guide tube (370), the device (300) may be displaced towards the conduit (111). The device (300) upon displacement into the conduit (111) may result in at least one link of the plurality of links (100) to contact or abut the inner surface of the conduit (111) [as seen in Fig. 4a]. Upon contact between the at least one link of the plurality of links (100), the at least one link of the plurality of links (100) may pivot into the conduit (111) [as seen in Fig. 4b]. Further, the corresponding displacement of each of the plurality of links (100) may pivot about the pivot pin (371), thereby facilitating the device (300) to traverse along a length of the conduit (111) [as seen in Fig. 2]. In an embodiment, the pivot pin (371) may aid in self-aligning the device (300) during the transition into the conduit (111) and facilitate traversing of the device (300) into the conduit (111).

During traversing of the device (300) inside the conduit (111), the pair of guide projections (320) may interact with the inner surface of the conduit (111) and may abut the at least one protrusion (330) (thus, the at least one sensor) against the inner surface of the conduit (111) for measuring the thickness of the abutted surface of the conduit (111). The at least one protrusion (330) abutting against the inner surface of the conduit (111), may displace the at least one carrier link (304) against the biasing force of the resilient member (310). The biasing force of the resilient member (310) may be adapted to rigidly abut the at least one protrusion (330) against the inner surface of the conduit (111). In an embodiment, the device (300) may be introduced into the conduit (111) with the presence of the coolant. Upon abutting of the at least one protrusion (330), the at least one sensor (340) may propagate signals or waves which are transmitted into the inner surface of the conduit (111) and received back by the at least one sensor (340) for determining the thickness of the conduit (111). In an embodiment, the at least one sensor (340) may continuously determine thickness of the conduit (111), during traversing of the device (300) within the conduit (111), thereby determining the thickness along the length of the conduit (111).

In an embodiment, the inlet/outlet port (130) may be defined diagonal or traverse to the conduit (111). Further, the inlet/outlet port (130) may be defined inline with the conduit (111).

In an embodiment, the device (300) may be automatically displaced into the conduit (111) by an actuator such as but not limiting to a motor, a robot, and the like that may be actuated by the control unit (400). Further, the device (300) may be manually displaced into the conduit (111).

In an embodiment, the at least one protrusion (330) and the pair of guide projections (320) may be made of any material having glass transition temperature less than or equal to 70 deg, for example, the material may be including but not limited to poly lactic acid (PLA).

In an embodiment, the device (300) may be introduced into the conduit (111) directly through the inlet/outlet port (130) without the guide tube (370). In another embodiment, the pivot pin (371) may be defined in the inlet/outlet port (130) of the conduit (111), to facilitate traversing of the device (300) within the conduit (111).

In an embodiment, the device (300) may be coupled with a feeder assembly [not shown in figs.]. The feeder assembly may be a chain link assembly which may be configured to displace the device (300) into the conduit (111) and along the length of the conduit (111).

In an embodiment, the pair of guide projections (320) may be adapted to extend from the at least one connecting link (303, 305) or may be adapted to partially extend from the at least one connecting link (303, 305) and partially from the plurality of links (100).

In an embodiment, the control unit (400) may include specialized processing units such as integrated system (bus) controllers, memory management control units, floating point units, graphics processing units, digital signal processing units, etc. The processing unit may include a microprocessor and the like. In an embodiment, the control unit (400) may include functional units such as a pulser/receiver, digitizer, transducer and a data acquisition system. The pulser/receiver may be configured to produce a high voltage electrical pulse. Further, driven by the pulser, the transducer may generate ultrasonic waves. The waves may propagate through the coolant and then the surface of the conduit (111). When there may be any discontinuity i.e. interface/crack in the wave path, only a part of the wave will be reflected from the discontinuity. The reflected wave signal may be then transformed into an electrical signal by the transducer and could be displayed on the display screen. Furthermore, the velocity of the waves through the surface of the conduit (111) and the travel time of the waves, may be directly converted to determine the thickness of the conduit (111).

In an embodiment, the system (500) is simple in construction which results in low-cost manufacturing and easy maintenance.

In an embodiment, the device (300) is configured to enter into the conduit (111) without any external intervention and automatically aligns and interacts with the inner surface of the conduit (111).

In an embodiment, the device (300) is configured to utilize the already present coolant in the conduit (111) as the propagation medium for measuring the thickness of the conduit (111) and eliminates extra mechanism for spraying propagating medium onto the surface of the conduit (111). Further, the resilient member (310), the at least one protrusion (330) and the pair of guide projections (320) enable rigid contact between the at least one sensor (340) and the inner surface of the conduit (111), thereby eliminating the requirement of pressurizing means.

In an embodiment, the resilient member (310) enables the device (300) to conform to the shape of the conduit (111) and aids the device (300) in expanding and retracting.

It should be imperative that the construction and configuration of the device (300), the system (500) and any other elements or components described in the above detailed description should not be considered as a limitation with respect to the figures. Rather, variation to such structural configuration of the elements or components should be considered within the scope of the detailed description.

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation *is* explicitly recited, those skilled in the art will recognize that such recitation should typically be interpreted to mean at *least* the recited number (e.g., the bare recitation of "two recitations," without other modifiers, typically means *at least* two recitations, or *two or more* recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

### Referral Numerals:

| **Reference Number** | **Description** |
|---|---|
| 500 | System |
| 300 | Device |
| 200 | Blast furnace |
| 100 | Plurality of links |
| 101 | Shell |
| 110 | Ribs |
| 111 | Conduit |
| 130 | Inlet port/outlet port |
| 303, 305 | Connecting link |
| 304 | Carrier link |
| 310 | Resilient member |
| 320 | Projection |
| 330 | Protrusion |
| 340 | Sensor |
| 360 | Image capturing unit |
| 370 | Guide tube |
| 371 | Pivot pin |
| 400 | Control unit |

## Claims

1. A device (300) for measuring thickness of a conduit (111), the device (300) comprising:
a plurality of links (100) pivotally connected to each other;
at least one carrier link (304) positioned between at least a pair of the plurality of links (100), and configured to accommodate at least one sensor (340);
at least a pair of guide projections (320) extending from the at least one pair of the plurality of links (100), wherein at least the pair of guide projections (320) is configured to interact with the conduit (111); and
at least one protrusion (330) extending from the at least one carrier link (304) and configured to support a portion of the at least one sensor (340), to contact the portion of the at least one sensor (340) with the conduit (111) for measuring thickness of the conduit (111), wherein the at least a pair of guide projections (320) extend in a direction opposite to the at least one protrusion (330).

2. The device (300) as claimed in claim 1, wherein at least one link of the plurality of links (100) is defined with a provision (361) to accommodate an image capturing unit (360) configured to capture images inside the conduit (111).

3. The device (300) as claimed in claim 1, wherein the at least one carrier link (304) is disposed offset to a longitudinal axis (A-A) of the plurality of links (100).

4. The device (300) as claimed in claim 1, comprises a resilient member (310) disposed across the at least one carrier link (304) and configured to provide biasing force on to the at least one carrier link (304) to offset the at least one carrier link (304) from the longitudinal axis (A-A) of the plurality of links (100).

5. The device (300) as claimed in claim 1, wherein the at least one sensor (340) is an ultrasonic sensor.

6. A system (500) for measuring thickness of a conduit (111), the system (500) comprising:
a guide tube (370);
a device (300) according to Claim 1, positioned in the guide tube (370) and configured to displace along the guide tube (370) into the conduit (111).,

7. The system (500) as claimed in claim 6, comprises a control unit (400) communicatively coupled to the device (300) and configured to measure the thickness along the length of the conduit (111).

8. The system (500) as claimed in claim 6, wherein the guide tube (370) comprises a pivot pin (371) in an inner surface, the pivot pin (371) is structured to facilitate pivotal movement of the plurality of links (100) into the conduit (111).

9. The system (500) as claimed in claim 6 comprises an image capturing unit (360) coupled to the control unit (400) and positioned on at least one of the plurality of links (100) to capture images inside the conduit (111).

10. The system (500) as claimed in claim 9, comprises a display unit communicatively coupled to the control unit (400), the control unit (400) is configured to display thickness along the length of the conduit (111) through the display unit.

11. The system (500) as claimed in claim 6, wherein the at least one carrier link (304) is disposed offset to a longitudinal axis (A-A) of the plurality of links (100).

12. The system (500) as claimed in claim 6, comprises a resilient member (310) disposed across the at least one carrier link (304) and configured to provide biasing force on to the at least one carrier link (304) to offset the at least one carrier link (304) from the longitudinal axis (A-A) of the plurality of links (100).

## Patentansprüche

1. Vorrichtung (300) zum Messen der Dicke einer Leitung (111), wobei die Vorrichtung (300) umfasst:
eine Mehrzahl von Gliedern (100), die schwenkbar miteinander verbunden sind;
mindestens ein Trägerglied (304), das zwischen mindestens einem Paar der Mehrzahl von Gliedern (100) angeordnet und ausgelegt ist, mindestens einen Sensor (340) aufzunehmen;
mindestens ein Paar von Führungsvorsprüngen (320), die sich von dem mindestens einen Paar der Mehrzahl von Gliedern (100) erstrecken, wobei mindestens das Paar von Führungsvorsprüngen (320) ausgelegt ist, mit der Leitung (111) zu interagieren; und
mindestens einen Vorsprung (330), der sich von dem mindestens einen Trägerglied (304) erstreckt und ausgelegt ist, einen Teil des mindestens einen Sensors (340) zu stützen, um den Teil des mindestens einen Sensors (340) mit der Leitung (111) in Kontakt zu bringen, um die Dicke der Leitung (111) zu messen, wobei sich das mindestens eine Paar von Führungsvorsprüngen (320) in eine dem mindestens einen Vorsprung (330) entgegengesetzte Richtung erstreckt.

2. Vorrichtung (300) nach Anspruch 1, wobei mindestens ein Glied der Mehrzahl von Gliedern (100) mit einer Aufnahme (361) versehen ist, um eine Bilderfassungseinheit (360) aufzunehmen, die ausgelegt ist, Bilder innerhalb der Leitung (111) zu erfassen.

3. Vorrichtung (300) nach Anspruch 1, wobei das mindestens eine Trägerglied (304) versetzt zu einer Längsachse (A-A) der Mehrzahl von Gliedern (100) angeordnet ist.

4. Vorrichtung (300) nach Anspruch 1, ferner umfassend ein elastisches Element (310), das über das mindestens eine Trägerglied (304) angeordnet ist und ausgelegt ist, eine Vorspannkraft auf das mindestens eine Trägerglied (304) auszuüben, um das mindestens eine Trägerglied (304) von der Längsachse (A-A) der Mehrzahl von Gliedern (100) zu versetzen.

5. Vorrichtung (300) nach Anspruch 1, wobei der mindestens eine Sensor (340) ein Ultraschallsensor ist.

6. System (500) zum Messen einer Dicke einer Leitung (111), wobei das System (500) umfasst:
ein Führungsrohr (370);
eine Vorrichtung (300) nach Anspruch 1, die in dem Führungsrohr (370) positioniert und ausgelegt ist, sich entlang des Führungsrohrs (370) in die Leitung (111) zu verlagern.

7. System (500) nach Anspruch 6, ferner umfassend eine Steuereinheit (400), die kommunikativ mit der Vorrichtung (300) gekoppelt und ausgelegt ist, die Dicke entlang der Länge der Leitung (111) zu messen.

8. System (500) nach Anspruch 6, wobei das Führungsrohr (370) einen Drehstift (371) an einer Innenfläche umfasst, wobei der Drehstift (371) ausgebildet ist, eine Schwenkbewegung der Mehrzahl von Gliedern (100) in die Leitung (111) zu erleichtern.

9. System (500) nach Anspruch 6, ferner umfassend eine Bilderfassungseinheit (360), die mit der Steuereinheit (400) gekoppelt und an mindestens einem der Mehrzahl von Gliedern (100) positioniert ist, um Bilder innerhalb der Leitung (111) zu erfassen.

10. System (500) nach Anspruch 9, ferner umfassend eine Anzeigeeinheit, die kommunikativ mit der Steuereinheit (400) gekoppelt ist, wobei die Steuereinheit (400) ausgelegt ist, die Dicke entlang der Länge der Leitung (111) über die Anzeigeeinheit anzuzeigen.

11. System (500) nach Anspruch 6, wobei das mindestens eine Trägerglied (304) versetzt zu einer Längsachse (A-A) der Mehrzahl von Gliedern (100) angeordnet ist.

12. System (500) nach Anspruch 6, ferner umfassend ein elastisches Element (310), das über das mindestens eine Trägerglied (304) angeordnet ist und ausgelegt ist, eine Vorspannkraft auf das mindestens eine Trägerglied (304) auszuüben, um das mindestens eine Trägerglied (304) von der Längsachse (A-A) der Mehrzahl von Gliedern (100) zu versetzen.

## Revendications

1. Dispositif (300) pour mesurer l'épaisseur d'un conduit (111), le dispositif (300) comprenant :
une pluralité de maillons (100) raccordés de manière pivotante les uns aux autres ;
au moins un maillon porteur (304) positionné entre au moins une paire de la pluralité de maillons (100), et configuré pour accueillir au moins un capteur (340) ;
au moins une paire de projections de guidage (320) s'étendant à partir de ladite au moins une paire de la pluralité de maillons (100), au moins la paire de projections de guidage (320) étant configurée pour interagir avec le conduit (111) ; et
au moins une saillie (330) s'étendant à partir de l'au moins un maillon porteur (304) et configurée pour supporter une partie de l'au moins un capteur (340), pour mettre en contact la partie de l'au moins un capteur (340) avec le conduit (111) afin de mesurer l'épaisseur du conduit (111), dans lequel l'au moins une paire de projections de guidage (320) s'étend dans une direction opposée à l'au moins une saillie (330).

2. Dispositif (300) selon la revendication 1, dans lequel au moins un maillon de la pluralité de maillons (100) est défini avec un élément prévu (361) pour accueillir une unité de capture d'images (360) configurée pour capturer des images à l'intérieur du conduit (111).

3. Dispositif (300) selon la revendication 1, dans lequel l'au moins un maillon porteur (304) est disposé décalé par rapport à un axe longitudinal (A-A) de la pluralité de maillons (100).

4. Dispositif (300) selon la revendication 1, comprenant un élément élastique (310) disposé à travers l'au moins un maillon porteur (304) et configuré pour fournir une force de sollicitation sur l'au moins un maillon porteur (304) afin de décaler l'au moins un maillon porteur (304) par rapport à l'axe longitudinal (A-A) de la pluralité de maillons (100).

5. Dispositif (300) selon la revendication 1, dans lequel l'au moins un capteur (340) est un capteur ultrasonique.

6. Système (500) pour mesurer l'épaisseur d'une conduite (111), le système (500) comprenant :
un tube de guidage (370) ;
un dispositif (300) selon la revendication 1, positionné dans le tube de guidage (370) et configuré pour se déplacer le long du tube de guidage (370) jusque dans le conduit (111).

7. Système (500) selon la revendication 6, comprenant une unité de commande (400) couplée de manière communicante au dispositif (300) et configurée pour mesurer l'épaisseur le long de la longueur du conduit (111).

8. Système (500) selon la revendication 6, dans lequel le tube de guidage (370) comprend un axe de pivotement (371) dans une surface interne, l'axe de pivotement (371) est structuré pour faciliter un déplacement pivotant de la pluralité de maillons (100) jusque dans le conduit (111).

9. Système (500) selon la revendication 6 comprenant une unité de capture d'images (360) couplée à l'unité de commande (400) et positionnée sur au moins un maillon de la pluralité de maillons (100) pour capturer des images à l'intérieur du conduit (111).

10. Système (500) selon la revendication 9, comprenant une unité d'affichage couplée de manière communicante à l'unité de commande (400), l'unité de commande (400) étant configurée pour afficher l'épaisseur le long de la longueur du conduit (111) par le biais de l'unité d'affichage.

11. Système (500) selon la revendication 6, dans lequel l'au moins un maillon porteur (304) est disposé décalé par rapport à un axe longitudinal (A-A) de la pluralité de maillons (100).

12. Système (500) selon la revendication 6, comprenant un élément élastique (310) disposé à travers l'au moins un maillon porteur (304) et configuré pour fournir une force de sollicitation sur l'au moins un maillon porteur (304) afin de décaler l'au moins un maillon porteur (304) par rapport à l'axe longitudinal (A-A) de la pluralité de maillons (100).
